# FASCICULE DE BREVET EUROPEEN

(11) **EP 1 649 472 B1**
(45) Date de publication et mention de la délivrance du brevet: **27.10.2010**
(21) Numéro de dépôt: 04767778.6
(22) Date de dépôt: 26.07.2004
(51) Int. Cl.: H01F 7/16, F16K 31/06, F01L 9/04

(54) **ELECTROVALVE, PROCEDE D'ASSEMBLAGE D'UN SOLENOÏDE SUR LADITE ELECTROVALVE, ET PROCEDE DE DESASSEMBLAGE DU SOLENOÏDE DE LADITE ELECTROVALVE**
ELEKTROMAGNETISCHES VENTIL, VERFAHREN ZUM ANBRINGEN EINER SOLENOIDSPULE AN DEM ELEKTROMAGNETISCHEN VENTIL UND VERFAHREN ZUM ABLÖSEN DER SOLENOIDSPULE VON DIESEM ELEKTROMAGNETISCHEN VENTIL
ELECTROMAGNETIC VALVE, METHOD FOR ATTACHING A SOLENOID TO SAID ELECTROMAGNETIC VALVE, AND METHOD FOR DETACHING THE SOLENOID FROM THIS ELECTROMAGNETIC VALVE

(30) Priorité: 29.07.2003 FR 0309279
(43) Date de publication de la demande: 26.04.2006
(73) Titulaire: Delphi Technologies, Inc., Troy, MI 48007 (US)
(72) Inventeur: CARDON, Christophe, F-75002 Paris (FR)
(74) Mandataire: Laget, Jean-Loup
(86) Numéro de dépôt international: PCT/FR2004/001989
(87) Numéro de publication internationale: WO 2005/015582

(56) Documents cités:
- EP-A- 0 538 986
- EP-A- 1 036 973
- EP-A- 1 288 482
- DE-A- 19 934 697
- US-A- 2 851 056
- US-A- 4 088 975

## Description

La présente invention concerne une électrovalve, en particulier du genre utilisé dans un bloc hydraulique monté dans un véhicule automobile.

L'invention concerne également un procédé d'assemblage d'un solénoïde sur ladite électrovalve, ainsi qu'un procédé de désassemblage du solénoïde de ladite électrovalve.

Ces électrovalves comportent en général un boîtier sensiblement cylindrique pourvu d'une collerette formant butée à un solénoïde qui est monté à l'une des extrémités de l'électrovalve. Le solénoïde est pourvu d'un trou axial recevant cette extrémité de l'électrovalve lors de l'assemblage de ces deux éléments. Le solénoïde peut ainsi être déplacé axialement le long de cette extrémité pour venir en butée contre cette collerette. L'électrovalve comporte en outre des premiers moyens de liaison du boîtier au solénoïde lorsqu'il se trouve en butée contre la collerette, ainsi que des deuxièmes moyens de liaison du boîtier à l'intérieur d'un trou formant port dans le bloc hydraulique.

L'invention concerne en particulier ces premiers moyens de liaison qui forment en même temps des moyens de blocage axial du solénoïde dans sa position d'utilisation sur le boîtier de valve. L'électrovalve en tant que telle ne sera pas décrite en détails puisqu'elle est bien connue de l'homme du métier.

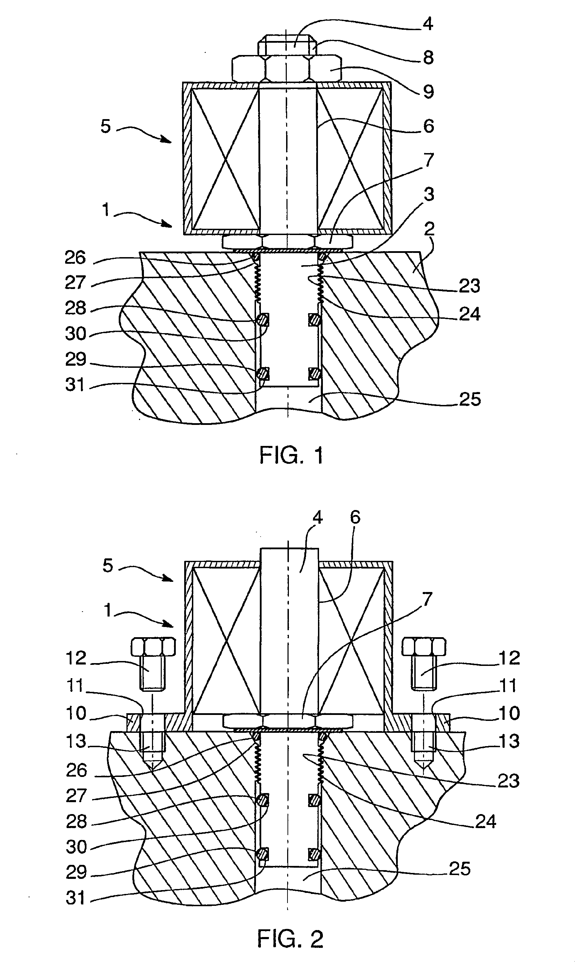

On connaît des premiers et deuxième moyens de liaison associés au boîtier d'une électrovalve. Deux modes de réalisation généralement utilisés sont illustrés sur les figures 1, 2 respectivement.

Dans la figure 1 qui montre très schématiquement une électrovalve du type décrit dans le document EP 0 538 986. L'électrovalve 1 est illustrée dans sa position d'installation dans un bloc hydraulique 2. Les détails à l'intérieur de la valve ne sont pas montrés puisqu'ils ne se rapportent pas directement à l'invention. L'électrovalve 1 comporte un boîtier 3 sensiblement cylindrique dont l'une (4) des extrémités est montrée à la figure 1. Un solénoïde 5 comporte un trou axial traversant 6 recevant l'extrémité 4 de l'électrovalve 1. Le solénoïde 5 se trouve en butée contre une collerette 7 prévue sur la périphérie du boîtier 3 et il y est bloqué dans une position d'utilisation à l'aide de moyens de blocage axial.

Dans l'exemple illustré à la figure 1, ces moyens de blocage axial du solénoïde 5 comportent un filetage 8 en bout de l'extrémité 4 du boîtier 3 qui coopère avec un écrou 9 vissé sur l'extrémité 4 en étant serré contre une surface d'extrémité du solénoïde de manière à solliciter la surface d'extrémité opposée de celui-ci contre la collerette 7. Le filetage 8 constitue avec le taraudage de l'écrou 9 des premiers moyens de liaison pour relier ces deux éléments ensemble.

Le boîtier 3 est sur une partie de sa longueur pourvu d'un deuxième filetage 23 qui coopère avec taraudage 24 prévu dans un trou formant port 25 du bloc hydraulique 2. Le filetage 23 constitue avec le taraudage 24 des deuxièmes moyens de liaison pour relier l'électrovalve 1 au bloc hydraulique 2. La collerette 7 a une forme hexagonale afin de permettre le vissage de l'électrovalve 1 dans le bloc hydraulique à l'aide d'un outil (non représenté).

Dans l'exemple illustré sur la figure 1, une première bague d'étanchéité 26 est disposée dans un évidement conique 27 autour de l'ouverture du trou formant port 25 sur la face du bloc hydraulique 2. Une deuxième bague d'étanchéité 28 et une troisième bague d'étanchéité 29 sont disposées dans une gorge 30 respectivement 31 sur la périphérie du boîtier 3 de l'électrovalve 1.

La figure 2 illustre une électrovalve 1 qui diffère de celle décrite en référence à la figure 1 uniquement par le fait qu'elle comporte un autre type de moyens de liaison ou de blocage axial du solénoïde 5 par rapport au boîtier 3 de l'électrovalve 1. Les autres éléments étant les mêmes, ils ont gardé leurs références et ne seront pas décrits davantage.

Les moyens de blocage axial illustrés à la figure 2 comportent une bride 10 à l'une des extrémités du solénoïde, cette bride étant pourvue de plusieurs trous traversants 11 recevant une vis de fixation respective 12 pouvant être vissée dans un trou taraudé respectif 13 prévu dans le bloc hydraulique. La bride 10 est ainsi serrée contre le bloc hydraulique en sollicitant le solénoïde 5 contre la collerette 7 du boîtier de valve 3.

A la place de la bride, on pourrait également utiliser des pattes pourvues d'un trou au lieu et à la place de la bride 10. Ces pattes pourraient être au nombre de quatre et régulièrement espacées sur le pourtour du solénoïde 5.

On connaît également du document US5511864 une électrovalve qui, outre une fixation par anneau élastique du boîtier sur le bloc hydraulique comporte un ressort autour du boîtier entre deux surfaces en regard, l'une étant prévue sur l'ensemble solénoïde-boîtier et l'autre sur le bloc hydraulique en repoussant le boîtier.

Cependant, ces solutions connues, en particulier ces premiers moyen de liaison, sont encombrantes et onéreuses à mettre en oeuvre. De plus, elles nécessitent un traitement anticorrosion de la partie de l'électrovalve qui est exposée à l'environnement.

Le but de l'invention est de remédier à ces inconvénients en proposant une électrovalve pourvue de moyens de liaison, d'une part entre le solénoïde et le boîtier, et d'autre part entre le boîtier et le bloc hydraulique, permettant un assemblage très aisé et peu coûteuse du solénoïde sur le boîtier de la valve, et de ce dernier sur le bloc hydraulique, ainsi que l'obtention d'une étanchéité améliorée rendant le traitement anticorrosion non obligatoire.

L'objet de l'invention est une électrovalve selon la revendication 1.

Selon d'autres caractéristiques de l'invention :
- ledit anneau fendu est un anneau métallique ;
- ledit anneau fendu présente une section circulaire ;
- l'épaisseur de la paroi séparant ladite deuxième gorge de la face d'extrémité correspondante du solénoïde est suffisamment mince pour permettre le démontage du solénoïde en le forçant vers l'extérieur de manière à déformer ladite paroi au moyen dudit anneau fendu ;
- la surface d'extrémité du solénoïde tournée vers ladite collerette est globalement tronconique et apte à coopérer avec un coin ;
- le solénoïde est couvert de tous les côtés par une enveloppe de protection ;
- ladite enveloppe est en un métal amagnétique malléable et présente une forme tubulaire globalement cylindrique, fermée à l'une de ses extrémités et sertie sur le solénoïde à l'extrémité opposée ;
- ladite enveloppe est en une matière plastique surmoulée sur le solénoïde.

Selon le procédé d'assemblage de l'invention d'un solénoïde à la valve définie ci-dessus on place l'anneau fendu dans l'une ou l'autre desdites première et deuxième gorges sur le boîtier ou sur la face intérieure dudit trou axial du solénoïde, respectivement, on aligne ce trou axial sur l'extrémité du boîtier de valve, on introduit cette extrémité dans le trou axial et on pousse sur le solénoïde pour le déplacer axialement vers la collerette formant butée sur le boîtier tout en déformant élastiquement l'anneau fendu dans un sens radial pour l'escamoter dans ladite gorge jusqu'à ce que lesdites première et deuxième gorges viennent en regard l'une de l'autre pour permettre à l'anneau fendu de retrouver sa forme initiale en s'étendant simultanément dans les deux gorges.

Selon une autre caractéristique de l'assemblage, la bague intermédiaire est comprimée pour supprimer tout jeu axial du solénoïde sur le boîtier lorsque les première et deuxième gorges sont disposées en regard l'une de l'autre.

Selon encore une autre caractéristique de l'assemblage, ladite bague intermédiaire élastiquement compressible est suffisamment comprimée entre la collerette et une surface d'appui annulaire sur une face d'extrémité du solénoïde pour constituer en même temps un moyen de blocage en rotation de celui-ci autour du boîtier de valve.

Selon le procédé de désassemblage de l'invention d'un solénoïde de la valve définie ci-dessus, on introduit un outil sous forme d'un coin entre la surface d'extrémité du solénoïde et le bloc hydraulique et on enfonce le coin horizontalement pour créer un composant de force agissant verticalement pour déplacer le solénoïde vers l'extérieur en déformant la paroi au moyen de l'anneau fendu qui est bloqué axialement dans les première et deuxième gorges.

D'autres caractéristiques et avantages de l'invention ressortiront de la description qui va suivre d'un mode de réalisation non limitatif de l'invention, en référence aux figures annexées dans lesquelles :
- les figures 1 et 2 sont des vues en coupe axiale schématique de deux réalisations connues décrites dans l'introduction ;
- la figure 3 est une vue en coupe schématique montrant un mode de réalisation de l'invention ;
- la figure 4 est une vue en coupe en plus grande échelle de quelques détails encerclés sur la figure 3 ;
- la figure 5 est une vue en plan d'un anneau fendu des moyens de blocage axial selon l'invention ;
- la figure 6 est une vue très schématique d'un désassemblage du solénoïde du boîtier de l'électrovalve ;

Dans les figures, les éléments identiques ou équivalents porteront les mêmes signes de référence.

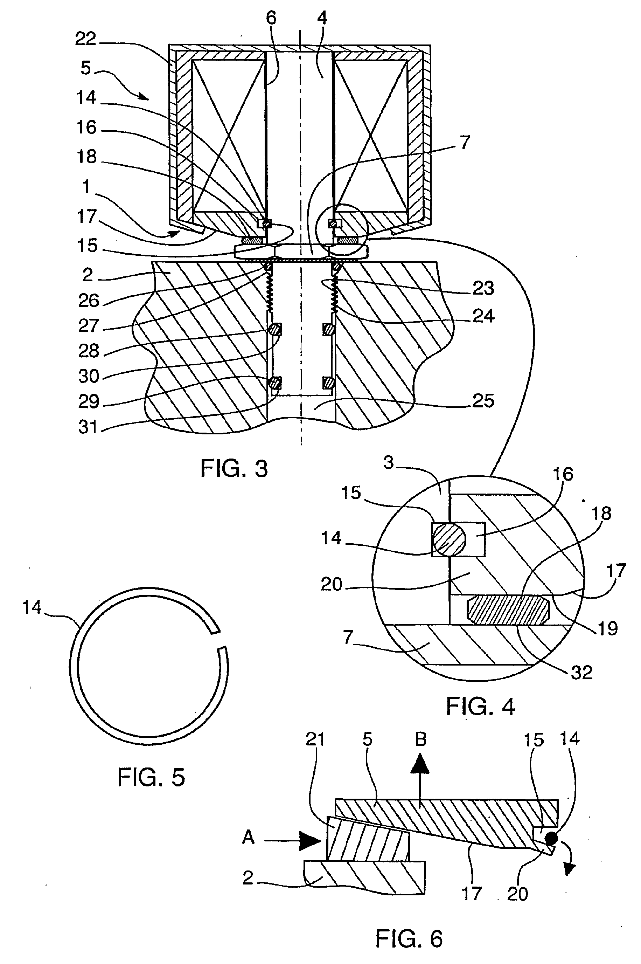

Tout comme dans les figures 1 et 2, l'électrovalve 1 de la figure 3 est illustrée dans sa position d'installation dans un bloc hydraulique 2. Ici également, les détails à l'intérieur de la valve ne sont pas montrés puisqu'ils ne se rapportent pas directement à l'invention. L'électrovalve 1 comporte un boîtier 3 sensiblement cylindrique dont l'une (4) des extrémités est montrée à la figure 3 insérée dans le trou axial du solénoïde 5, alors que son extrémité opposée, qui porte un filetage 23, est vissé dans le trou formant port 25 du bloc hydraulique 2.

Le solénoïde 5 se trouve en butée contre une collerette 7 de forme hexagonale prévue sur la périphérie du boîtier 3 et il y est bloqué dans une position d'utilisation à l'aide de premier moyens de liaison qui forment également des moyens de blocage axial.

Selon une caractéristique importante de l'invention, ces premiers moyens de liaison du solénoïde 5 au boîtier 3 de l'électrovalve 1 de manière à former un ensemble. Ces premiers moyens de liaison comportent un anneau fendu 14 en un matériau légèrement élastique. Cet anneau est apte à s'étendre dans un premier évidement circulaire sous forme d'une gorge 15 sur la périphérie du boîtier, et partiellement et simultanément aussi dans un deuxième évidement circulaire sous forme d'une gorge 16 prévue sur la face intérieure du trou axial du solénoïde 5 et qui peut être disposée en regard de la gorge 15.

L'emplacement respectif de ces deux gorges 15, 16 est adapté en hauteur de sorte que les deux gorges viennent se placer en regard l'une de l'autre lorsque le solénoïde 5 vient en butée contre la collerette 7. L'anneau fendu 14 assure alors la liaison entre le solénoïde et le boîtier et de cette manière est également obtenu le blocage axial du solénoïde 5.

Afin d'offrir une résistance suffisante aux forces de cisaillement, l'anneau fendu 14 est de préférence en métal. Cet anneau présente de préférence une section circulaire, ce qui facilite l'assemblage, mais il peut également présenter une section rectangulaire.

Dans ce dernier cas, le bord au bout de l'extrémité 4 du boîtier 3 est avantageusement biseauté pour faciliter l'assemblage.

Avant montage, l'anneau fendu 14 présente un diamètre extérieur plus grand que le diamètre du trou axial 6 du boîtier 3, afin de pouvoir s'étendre simultanément dans les première et deuxième gorges 15, 16 après l'opération d'assemblage. Par ailleurs, la profondeur de l'une des première et deuxième gorges 15, 16 est au moins égale à l'épaisseur de l'anneau afin de permettre à celui-ci de s'y escamoter élastiquement lors de l'opération d'assemblage, alors que pour obtenir un effet de blocage axial, la profondeur de l'autre gorge (15 ou 16) est inférieure à l'épaisseur de l'anneau de sorte que la périphérie extérieure de l'anneau 14 puisse faire saillie en dehors de la gorge à profondeur réduite pour ainsi pénétrer légèrement dans l'autre gorge lorsque les deux gorges 15, 16 sont placées en regard l'une de l'autre et que l'anneau est sollicité vers le fond de la gorge à profondeur réduite de la manière qui sera expliquée par la suite.

Pour l'assemblage du solénoïde 5 sur le boîtier de valve 3, il suffit de placer l'anneau fendu 14 dans celle des première et deuxième gorges 15, 16 qui présente une profondeur au moins égale à l'épaisseur de l'anneau fendu 14, d'aligner ce trou axial sur l'extrémité 4 du boîtier de valve 3, d'introduire cette extrémité dans le trou axial et de pousser sur le solénoïde pour le déplacer axialement vers la collerette 7 formant butée sur le boîtier.

Dans le cas où la première gorge 15 sur le boîtier 3 présente une profondeur adaptée pour recevoir l'anneau fendu 14 au début de l'opération d'assemblage, l'anneau y sera déformé élastiquement dans le sens radial vers l'intérieur pour s'escamoter entièrement dans cette gorge 15 dès qu'il vient en contact avec le rebord autour du trou axial 6 du solénoïde 5.

Dans le cas où la deuxième gorge 16 dans le trou axial 6 du solénoïde 5 présente une profondeur adaptée pour recevoir l'anneau fendu 14 au début de l'opération d'assemblage (voir figures 3 et 4), l'anneau y sera déformé élastiquement dans le sens radial vers l'extérieur pour s'escamoter entièrement dans cette gorge 16 dès qu'il vient en contact avec le bord périphérique de l'extrémité 4 du boîtier 3.

Aussi bien dans un cas comme dans l'autre, l'anneau fendu restera escamoté dans la gorge correspondante 15 ou 16 jusqu'à ce que les deux gorges 14, 15 soient disposées en regard l'une de l'autre. A cet instant, l'anneau fendu 14 reprendra sa forme initiale pour s'étendre simultanément dans les deux gorges.

Afin d'éliminer tout jeu qui pourrait subsister entre la face d'extrémité 17 du solénoïde 5 et la collerette, les premiers moyens de liaison sont selon une caractéristique importante de l'invention associés à une bague intermédiaire élastiquement compressible 18 disposée autour du boîtier 3 de l'électrovalve, entre une première surface d'appui 32 sur la collerette 7 et une deuxième surface d'appui annulaire opposée 19 sur cette extrémité 17 du solénoïde, autour du trou axial 6.

Cette bague intermédiaire élastiquement compressible 18 est lors de l'assemblage du solénoïde 5 sur le boîtier de valve 3 comprimée de manière à éliminer tout jeu dans les premiers moyens de liaison en sollicitant le solénoïde vers l'extérieur. Cette sollicitation aura pour effet que l'un des bords délimitant la deuxième gorge 16 (voir figure 4) poussera l'anneau fendu radialement vers l'intérieur de la première gorge jusqu'à ce qu'il vienne en appui contre le fond de celle-ci. Dans cette position, le solénoïde 5 est entièrement bloqué axialement.

La bague intermédiaire élastiquement compressible 18 est avantageusement suffisamment comprimée entre la première surface d'appui 32 de la collerette 7 et la deuxième surface d'appui 19 du solénoïde 5 pour constituer en même temps un moyen de blocage en rotation du solénoïde autour du boîtier de valve 3. Cette bague 18 est de préférence en un matériau permettant à la bague de constituer en plus une étanchéité efficace. Ainsi, la bague intermédiaire élastique 18 présente trois fonctions différentes : rattrapage de jeu, blocage en rotation et étanchéité.

Afin de pouvoir échanger le solénoïde 5 si besoin en est, il est nécessaire de pouvoir le désassembler du boîtier de valve 3. Pour permettre le désassemblage, la paroi 20 dans le solénoïde séparant la deuxième gorge 16 de la surface d'appui annulaire 19 est suffisamment mince pour que l'on puisse effectuer le démontage du solénoïde en forçant le solénoïde vers l'extérieur de manière à déformer ladite paroi au moyen dudit anneau fendu.

Ce désassemblage est illustré à la figure 6 qui montre l'introduction d'un outil sous forme d'un coin 21 entre la surface d'extrémité 17 du solénoïde 5 et le bloc hydraulique 2. Lorsque ce coin est enfoncé dans le sens de la flèche horizontale A, un composant de force va agir dans le sens de la flèche verticale B pour déplacer le solénoïde vers l'extérieur en déformant la paroi 20 au moyen de l'anneau fendu 14 qui est bloqué axialement dans les première et deuxième gorges 15, 16.

Afin de faciliter ce désassemblage en cas d'échange du solénoïde, la face d'extrémité 17 du solénoïde 5 est de préférence globalement tronconique pour offrir une meilleure surface d'appui à la surface supérieure inclinée sur le coin 21 illustré à la figure 6.

Le solénoïde 5 est avantageusement pourvu d'une enveloppe de protection 22 qui l'entoure de tous les côtés en laissant libre uniquement une zone autour du trou axial 6 et qui grâce à la présence de la bague intermédiaire 18 rend tout l'ensemble étanche de sorte qu'aucun traitement anticorrosion des surfaces métalliques n'est plus nécessaire.

Cette enveloppe 22 peut être en un métal amagnétique malléable et avoir une forme tubulaire globalement cylindrique, fermée à l'une de ses extrémités et sertie sur le solénoïde 5 à l'extrémité opposée.

En variante, cette enveloppe peut être en une matière plastique tout simplement surmoulée sur le solénoïde.

Bien entendu, l'invention n'est pas limitée aux exemples illustrés et décrits et l'homme du métier pourra y apporter des modifications sans pour autant sortir du cadre de l'invention tel que déterminé par les revendications.

## Revendications

1. Electrovalve comportant un boîtier sensiblement cylindrique (3) et un solénoïde (5) présentant un trou axial (6) apte à recevoir l'une des extrémités dudit boîtier (3), ledit boîtier étant associé à des premiers moyens de liaison dudit boîtier (3) audit solénoïde (5) de manière à former un ensemble et à des deuxièmes moyens de liaison dudit boîtier (3) à un trou formant port (25) dans un bloc hydraulique (2), **caractérisée par le fait que** lesdits premiers moyens de liaison comportent un anneau fendu (14) apte à être disposé dans un premier évidement circulaire (15) prévu sur la périphérie dudit boîtier (3) pour s'étendre partiellement et simultanément dans un deuxième évidement circulaire (16) prévu sur la face intérieure dudit trou axial (6) du solénoïde (5) de manière à effectuer la liaison entre d'une part ledit boîtier (3) et d'autre part ledit solénoïde (5), lesdits premiers moyens de liaison étant associés à au moins une bague intermédiaire élastiquement compressible (18) disposée autour dudit boîtier (3) et apte à être comprimée entre une première et une deuxième surfaces d'appui opposées (19, 32) mises en regard l'une de l'autre, l'une (19) desdites première et deuxième surfaces d'appui (19, 32) étant prévue sur le solénoïde (5) autour dudit trou axial (6) de celui-ci et l'autre (32) sur une collerette (7) du boîtier (3).

2. Electrovalve selon la revendication 1, **caractérisée par** le fait lesdits premier et deuxième évidements sont des première et deuxième gorges (15, 16), et que l'épaisseur de la paroi (20) séparant ladite deuxième gorge (16) de la face d'extrémité correspondante (17) du solénoïde (5) est suffisamment mince pour permettre le démontage du solénoïde (5) en le forçant vers l'extérieur de manière à déformer ladite paroi (20) au moyen dudit anneau fendu (14).

3. Electrovalve selon la revendication 2, **caractérisée par le fait que** la surface d'extrémité du solénoïde (5) tournée vers ladite collerette (7) est globalement tronconique et apte à coopérer avec un coin (21).

4. Electrovalve selon l'une quelconque des revendications précédentes, **caractérisée par le fait que** le solénoïde (5) est couvert de tous les côtés par une enveloppe de protection (22).

5. Electrovalve selon la revendication 4, **caractérisée par le fait que** ladite enveloppe (22) est en un métal amagnétique malléable et présente une forme tubulaire globalement cylindrique, fermée à l'une de ses extrémités et sertie sur le solénoïde (5) à l'extrémité opposée.

6. Electrovalve selon la revendication 4, **caractérisée par le fait que** ladite enveloppe (22) est en une matière plastique surmoulée sur le solénoïde (5).

7. Electrovalve selon l'une quelconque des revendications précédentes, **caractérisée par le fait que** ledit anneau fendu (14) est un anneau métallique.

8. Electrovalve selon l'une quelconque des revendications précédentes, **caractérisée par le fait que** ledit anneau fendu (14) présente une section circulaire.

9. Procédé d'assemblage d'une électrovalve selon l'une quelconque des revendications 1 à 8, dans lequel on place l'anneau fendu (14) dans l'une ou l'autre desdites première et deuxième gorges (15, 16) sur le boîtier (3) ou sur la face intérieure dudit trou axial (6) du solénoïde (5), respectivement, on aligne ce trou axial (6) sur l'extrémité (4) du boîtier de valve (3), on introduit cette extrémité dans le trou axial (6) et on pousse sur le solénoïde (5) pour le déplacer axialement vers une collerette (7) formant butée sur le boîtier (3) tout en déformant élastiquement l'anneau fendu dans un sens radial pour l'escamoter dans ladite gorge (15 ou 16) jusqu'à ce que lesdites première et deuxième gorges (15, 16) viennent en regard l'une de l'autre pour permettre à l'anneau fendu (14) de retrouver sa forme initiale en s'étendant simultanément dans les deux gorges, et la bague intermédiaire (18) est lors de l'assemblage comprimée pour supprimer tout jeu axial du solénoïde (5) sur le boîtier (3) lorsque les première et deuxième gorges (15, 16) sont disposées en regard l'une de l'autre.

10. Procédé d'assemblage d'une électrovalve selon la revendication 9, **caractérisé par le fait que** ladite bague intermédiaire élastiquement compressible (18) est suffisamment comprimée entre la collerette (7) et une surface d'appui annulaire (19) sur une face d'extrémité (17) du solénoïde (5) pour constituer en même temps un moyen de blocage en rotation de celui-ci autour du boîtier de valve (3).

11. Procédé de désassemblage du solénoïde (5) d'une électrovalve selon la revendication 2 ou 3, **caractérisé par le fait qu'**on introduit un outil sous forme d'un coin (21) entre la surface d'extrémité (17) du solénoïde (5) et ledit bloc hydraulique (2) et on enfonce le coin (21) horizontalement pour créer un composant de force agissant verticalement pour déplacer le solénoïde (5) vers l'extérieur en déformant la paroi (20) au moyen de l'anneau fendu (14) qui est bloqué axialement dans les première et deuxième gorges (15, 16).

## Claims

1. Solenoid valve comprising a substantially cylindrical housing (3) and a solenoid (5) having an axial hole (6) capable of receiving one of the ends of said housing (3), said housing being associated with first connection means for connecting said housing (3) to said solenoid (5) in such a way as to form an assembly and with second connection means for connecting said housing (3) to a hole forming a port (25) in a hydraulic block (2), **characterised in that** said first connection means comprise a split ring (14) which is able to be arranged in a first circular recess (15) provided on the periphery of said housing (3) so as to extend partially and simultaneously into a second circular recess (16) provided on the inner face of said axial hole (6) of the solenoid (5) in such a way as to establish the connection between said housing (3) on the one hand and said solenoid (5) on the other hand, said first connection means being associated with at least one elastically compressible intermediate ring (18) which is arranged around said housing (3) and is able to be compressed between a first and a second opposite bearing surface (19, 32) which face one another, one (19) of said first and second bearing surfaces (19, 32) being provided on the solenoid (5) around said axial hole (6) thereof and the other (32) being provided on a collar (7) of the housing (3).

2. Solenoid valve according to claim 1, **characterised in that** said first and second recesses are first and second grooves (15, 16), and **in that** the thickness of the wall (20) separating said second groove (16) from the corresponding end face (17) of the solenoid (5) is sufficiently thin to allow the removal of the solenoid (5) by forcing it outwards in such a way as to deform said wall (20) by means of said split ring (14).

3. Solenoid valve according to claim 2, **characterised in that** the end surface of the solenoid (5) facing towards said collar (7) is generally frustoconical and is able to cooperate with a wedge (21).

4. Solenoid valve according to any one of the preceding claims, **characterised in that** the solenoid (5) is covered on all sides by a protective casing (22).

5. Solenoid valve according to claim 4, **characterised in that** said casing (22) is made of a malleable non-magnetic metal and has a generally cylindrical tubular shape, closed at one of its ends and crimped onto the solenoid (5) at the opposite end.

6. Solenoid valve according to claim 4, **characterised in that** said casing (22) is made of a plastic material overmoulded onto the solenoid (5).

7. Solenoid valve according to any one of the preceding claims, **characterised in that** said split ring (14) is a metal ring.

8. Solenoid valve according to any one of the preceding claims, **characterised in that** said split ring (14) has a circular cross-section.

9. Method for assembling a solenoid valve according to any one of claims 1 to 8, in which the split ring (14) is placed into one or the other of said first and second grooves (15, 16) on the housing (3) or on the inner face of said axial hole (6) of the solenoid (5), respectively, this axial hole (6) is aligned with the end (4) of the valve housing (3), this end is introduced into the axial hole (6) and a pushing force is exerted on the solenoid (5) so as to displace it axially towards a collar (7) forming a stop on the housing (3) while elastically deforming the split ring in a radial direction so as to retract it into said groove (15 or 16) until said first and second grooves (15, 16) come to face one another so as to enable the split ring (14) to reassume its initial shape by extending simultaneously into the two grooves, and the intermediate ring (18) is compressed during assembly in order to suppress any axial play of the solenoid (5) on the housing (3) when the first and second grooves (15, 16) are arranged facing one another.

10. Method for assembling a solenoid valve according to claim 9, **characterised in that** said elastically compressible intermediate ring (18) is sufficiently compressed between the collar (7) and an annular bearing surface (19) on an end face (17) of the solenoid (5) so as to constitute at the same time a means for blocking the rotation of the latter about the valve housing (3).

11. Method for removing the solenoid (5) from a solenoid valve according to claim 2 or 3, **characterised in that** a tool in the shape of a wedge (21) is introduced between the end surface (17) of the solenoid (5) and said hydraulic block (2) and the wedge (21) is pushed in horizontally so as to create a force component acting vertically to displace the solenoid (5) outwards by deforming the wall (20) by means of the split ring (14) which is blocked axially in the first and second grooves (15, 16).

## Patentansprüche

1. Elektromagnetisches Ventil, umfassend ein im Wesentlichen zylindrisches Gehäuse (3) und eine Solenoidspule (5), die ein axiales Loch (6) aufweist, das dazu geeignet ist, eines der Enden des Gehäuses (3) aufzunehmen, wobei das Gehäuse mit ersten Mitteln zur Verbindung des Gehäuses (3) mit der Solenoidspule (5), um eine Einheit zu bilden, und mit zweiten Mitteln zur Verbindung des Gehäuses (3) mit einem Loch, das einen Anschluss (25) in einem hydraulischen Block (2) bildet, assoziiert ist, **dadurch gekennzeichnet, dass** die ersten Mittel zur Verbindung einen geteilten Ring (14) umfassen, der dazu geeignet ist, in einer ersten kreisförmigen Aussparung (15) angebracht zu werden, die auf dem Umfang des Gehäuses (3) vorgesehen ist, um sich teilweise und gleichzeitig in eine zweite kreisförmige Aussparung (16) zu erstrecken, die auf der Innenseite des axialen Lochs (6) der Solenoidspule (5) vorgesehen ist, um die Verbindung zwischen einerseits dem Gehäuse (3) und andererseits der Solenoidspule (5) herzustellen, wobei die ersten Mittel zur Verbindung mit mindestens einem elastisch komprimierbaren Zwischenring (18) assoziiert sind, der um das Gehäuse (3) angebracht ist und dazu geeignet ist, zwischen einer ersten und einer zweiten einander entgegengesetzten Auflagefläche (19, 32) komprimiert zu werden, die einander gegenüberliegend angebracht sind, wobei eine (19) der ersten und zweiten Auflageflächen (19, 32) auf der Solenoidspule (5) um das axiale Loch (6) dieser und die andere (32) auf einem Flansch (7) des Gehäuses (3) vorgesehen ist.

2. Elektroventil nach Anspruch 1, **dadurch gekennzeichnet, dass** die erste und zweite Aussparung erste und zweite Rillen (15, 16) sind, und dass die Dicke der Wand (20), die die zweite Rille (16) von der entsprechenden Endseite (17) der Solenoidspule (5) trennt, ausreichend dünn ist, um den Ausbau der Solenoidspule (5) zu ermöglichen, in dem sie so gegen das Ende geschoben wird, dass sie die Wand (20) mithilfe des geteilten Rings (14) verformt.

3. Elektroventil nach Anspruch 2, **dadurch gekennzeichnet, dass** die Endoberfläche der Solenoidspule (5), die gegen den Flansch gedreht (7) ist, im ganzen kegelstumpfartig und dazu geeignet ist, mit einem Keil (21) zusammenzuarbeiten.

4. Elektroventil nach einem der vorhergehenden Ansprüche, **dadurch gekennzeichnet, dass** die Solenoidspule (5) an allen Seiten von einer Schutzhülle (22) abgedeckt ist.

5. Elektroventil nach Anspruch 4, **dadurch gekennzeichnet, dass** die Hülle (22) aus einem nichtmagnetischen verformbaren Metall besteht und eine röhrenartige, im ganzen zylindrische Form aufweist, die an einem ihrer Enden geschlossen ist und am gegenüberliegende Ende auf der Solenoidspule (5) gefalzt ist.

6. Elektroventil nach Anspruch 4, **dadurch gekennzeichnet, dass** die Hülle (22) aus einem Plastikmaterial besteht, das auf der Solenoidspule (5) übergossen ist.

7. Elektroventil nach einem der vorhergehenden Ansprüche, **dadurch gekennzeichnet, dass** der geteilte Ring (14) ein metallischer Ring ist.

8. Elektroventil nach einem der vorhergehenden Ansprüche, **dadurch gekennzeichnet, dass** der geteilte Ring (14) einen kreisförmigen Querschnitt aufweist.

9. Verfahren zum Anbringen eines Elektroventils nach einem der Ansprüche 1 bis 8, wobei der geteilte Ring (14) in der einen oder der anderen der ersten und zweiten Rille (15, 16) auf dem Gehäuse (3) bzw. auf der Innenseite des axialen Lochs (6) der Solenoidspule (5) angeordnet wird, wobei dieses axiale Loch (6) auf das Ende (4) des Ventilgehäuses (3) ausgerichtet wird, wobei dieses Ende in das axiale Loch (6) eingeführt wird und wobei auf die Solenoidspule (5) gedrückt wird, um sie axial auf einen Flansch (7) hin zu verschieben, der einen Anschlag auf dem Gehäuse (3) bildet und gleichzeitig den gebrochenen Ring in einer radialen Richtung elastisch verformt, um ihn in der Rille (15 oder 16) verschwinden zu lassen, bis die erste und die zweite Rille (15, 16) einander gegenüber liegen, um es dem geteilten Ring (14) zu ermöglichen, seine ursprüngliche Form wiederzuerlangen und sich gleichzeitig in die beiden Rillen (15, 16) zu erstrecken, und der Zwischenring (18) wird beim Anbringen komprimiert, um jedes axiale Spiel der Solenoidspule (5) auf dem Gehäuse (3) zu beseitigen, wenn die erste und die zweite Rille (15, 16) einander gegenüberliegend angeordnet sind.

10. Verfahren zum Anbringen eines Elektroventils nach Anspruch 9, **dadurch gekennzeichnet, dass** der elastisch komprimierbare Zwischenring (18) ausreichend zwischen dem Flansch (7) und einer ringförmigen Auflagefläche (19) auf einer Endseite (17) der Solenoidspule (5) komprimiert ist, um gleichzeitig ein sich drehendes Blockiermittel dieser um das Ventilgehäuse (3) zu bilden.

11. Verfahren zum Ablösen der Solenoidspule (5) eines Elektroventils nach Anspruch 2 oder 3, **dadurch gekennzeichnet, dass** ein Werkzeug in Form eines Keils (21) zwischen der Endfläche (17) der Solenoidspule (5) und dem hydraulischen Block (2) eingeführt wird und der Keil (21) horizontal eingedrückt wird, um eine Kraftkomponente zu erzeugen, die vertikal wirkt, um die Solenoidspule (5) nach außen zu verschieben und gleichzeitig die Wand (20) mithilfe eines geteilten Rings (14) zu deformieren, der axial in der ersten und zweiten Rille (15, 16) blockiert ist.
